# FASCICULE DE BREVET EUROPEEN

(11) **EP 2 508 110 B1**
(45) Date de publication et mention de la délivrance du brevet: **16.07.2014**
(21) Numéro de dépôt: 12163010.7
(22) Date de dépôt: 03.04.2012
(51) Int. Cl.: A47J 36/16, A47J 37/04, A47J 43/07, A47J 37/06, A47J 43/08

(54) **Appareil électrique de cuisson comportant un dispositif de remuage débrayable**
Elektrisches Kochgerät mit einkuppelbarer Rührvorrichtung
Electrical cooking appliance with an engageable stirring device

(30) Priorité: 07.04.2011 FR 1153025
(43) Date de publication de la demande: 10.10.2012
(73) Titulaire: SEB S.A., 69130 Ecully (FR)
(72) Inventeur: Bizard, Jean-Claude, 21121 Fontaine les Dijon (FR)
(74) Mandataire: Cémeli, Eric Philippe Laurent

(56) Documents cités:
- EP-A1- 1 969 978
- EP-A1- 2 248 452
- FR-A1- 2 871 042

## Description

La présente invention concerne le domaine technique des appareils électriques de cuisson utilisant un flux chauffant orienté de façon à frapper sensiblement au moins une partie des aliments.

Le document WO 2007/088279 divulgue un appareil électrique de cuisson du type précité, dans lequel un moyen de remuage disposé au sein d'un moyen de réception est entraîné en rotation par rapport au moyen de réception. Cet appareil permet notamment de faire des frites, mais n'est pas adapté pour cuire correctement les aliments fragiles tels que par exemple les calamars frits surgelés, et n'est pas adapté du tout pour cuire les steaks hachés, ni les grosses pièces de viande ou de poisson.

Le document FR-10 55737 divulgue un appareil de cuisson du type précité permettant la cuisson d'un plat complet comportant deux types d'aliments différents nécessitant des cuissons différenciées, du fait de l'utilisation simultanée d'un moyen de remuage et d'un support de cuisson additionnel. La présence du support de cuisson additionnel tend toutefois à confiner les aliments disposés dans le moyen de réception de l'appareil. Le support de cuisson additionnel est disposé dans l'appareil après une première étape de cuisson où les aliments présents dans le moyen de réception sont chauffés par le flux chauffant et peuvent devenir plus rigides. Le confinement de ces aliments par le support de cuisson additionnel conjugué à l'action du moyen de remuage peut entraîner une dégradation de l'aspect de ces aliments. Les aliments allongés tels que les frites peuvent notamment être cassés.

Le document EP-2248452 décrit un autre appareil de cuisson.

Un but de la présente invention est de proposer un appareil de cuisson du type précité, qui permet de réaliser plusieurs types de cuisson sans entraîner de dégradation de l'aspect des aliments.

Un but de la présente invention est de proposer un appareil de cuisson du type précité, qui permet de réaliser plusieurs types de cuisson tout en conservant une utilisation simple.

Ces buts sont atteints avec un appareil électrique de cuisson, notamment une friteuse à cuisson sèche, comprenant une enceinte de cuisson, un dispositif de chauffe conçu pour générer un flux chauffant dans l'enceinte de cuisson, un moyen de réception prévu pour recevoir les aliments dans l'enceinte de cuisson, et un moyen de remuage disposé au sein du moyen de réception et entraîné en rotation par rapport au moyen de réception, du fait que le moyen de remuage comporte un organe de remuage entraîné en rotation par un élément d'entraînement débrayable, que le moyen de remuage est prévu pour entraîner en rotation un accessoire de cuisson amovible et que l'élément d'entraînement débrayable est monté mobile par rapport à l'organe de remuage entre une position de repos occupée en l'absence de l'accessoire de cuisson amovible, dans laquelle l'organe de remuage est entraîné par l'élément d'entraînement débrayable, et une position débrayée occupée lorsque l'accessoire de cuisson amovible est entraîné par le moyen de remuage, dans laquelle l'organe de remuage est libre en rotation par rapport à l'élément d'entraînement débrayable. Ainsi la mise en place d'un accessoire de cuisson amovible sur le moyen de remuage désaccouple l'élément d'entraînement débrayable de l'organe de remuage. La présence de l'accessoire de cuisson amovible sur le moyen de remuage contribue à limiter le volume occupé par les aliments remués par le moyen de remuage. Ce confinement peut entraîner une détérioration d'aliments tels que les frites, qui peuvent être brisées lors du remuage du fait de la limitation des déplacements possibles. Avec l'invention l'organe de remuage est entraîné en rotation par l'organe d'entraînement débrayable en l'absence de l'accessoire de cuisson amovible sur le moyen de remuage, et n'est plus entraîné lorsque l'accessoire de cuisson amovible est en place sur le moyen de remuage. La détérioration des aliments précitée peut ainsi être évitée.

Selon une forme de réalisation préférée, l'élément d'entraînement débrayable comporte un organe d'entraînement en rotation. L'élément d'entraînement débrayable peut ainsi être directement entraîné en rotation par un organe entraîneur de l'appareil de cuisson. En alternative l'élément d'entrainement débrayable pourrait notamment être monté mobile sur un moyeu du moyen de remuage, ce moyeu présentant l'organe d'entraînement en rotation.

Selon une forme de réalisation préférée, le moyen de remuage est prévu pour porter l'accessoire de cuisson amovible. Cette disposition permet de limiter les efforts d'entraînement de l'accessoire de cuisson amovible.

Avantageusement alors, l'accessoire de cuisson amovible est porté par l'élément d'entraînement débrayable. L'élément d'entraînement débrayable peut ainsi être disposé en position axiale, ce qui garantit le déplacement de l'élément d'entraînement débrayable indépendamment de la répartition des aliments sur l'accessoire de cuisson amovible, qui pourrait incliner l'accessoire de cuisson amovible par rapport à sa position de référence et gêner l'actionnement correct de l'élément d'entraînement débrayable.

En alternative, l'accessoire de cuisson amovible pourrait notamment être porté par un moyeu du moyen de remuage, l'élément d'entraînement débrayable étant alors monté mobile par rapport audit moyeu. L'accessoire de cuisson amovible pourrait également être porté par le moyen de réception ou par toute autre partie du boîtier de l'appareil.

Selon une forme de réalisation avantageuse, l'élément d'entraînement débrayable est monté mobile par rapport à l'organe de remuage contre un moyen de rappel élastique. Cette disposition permet de s'affranchir de l'effet de la gravité pour obtenir le retour de l'élément d'entraînement débrayable vers la position de repos. En alternative l'élément d'entraînement débrayable pourrait notamment être repoussé vers le haut par l'accessoire de cuisson amovible mis en place sur le moyen de remuage, la présence d'un moyen de rappel élastique n'étant alors plus indispensable.

Selon une forme de réalisation préférée, l'accessoire de cuisson amovible mis en place sur le moyen de remuage repose sur des verrous chanfreinés mobiles montés sur l'élément d'entraînement débrayable et lors du déplacement de l'élément d'entraînement débrayable vers la position débrayée les verrous chanfreinés mobiles occupent une position de verrouillage maintenant l'élément d'entraînement débrayable en position débrayée. Le moyen de rappel élastique est ainsi maintenu comprimé indépendamment du poids de l'accessoire de cuisson amovible mis en place sur le moyen de remuage, et de la répartition des aliments sur l'accessoire de cuisson amovible.

Avantageusement alors, entre trois et six verrous chanfreinés mobiles sont montés sur l'élément d'entraînement débrayable.

Avantageusement encore, le moyen de réception comporte une paroi latérale présentant un obstacle s'étendant en périphérie de la course du moyen de remuage. Cette disposition contribue à favoriser le soulèvement d'aliments tels que des frites repoussés par le moyen de remuage. L'arrêt de la rotation de l'organe de remuage en présence de l'accessoire de cuisson amovible permet d'éviter un tel soulèvement susceptible de détériorer la forme des aliments.

Avantageusement encore, l'accessoire de cuisson amovible en place sur le moyen de remuage s'étend au dessus et au-delà du moyen de remuage. Cette disposition contribue à confiner les aliments sous l'accessoire de cuisson amovible. L'arrêt de la rotation de l'organe de remuage en présence de l'accessoire de cuisson amovible permet d'éviter les mouvements d'aliments dans cet espace confiné.

Avantageusement encore, le moyen de réception est formé par une cuve présentant une cheminée. Cette disposition permet de réaliser des opérations de cuisson utilisant une quantité de liquide non retenue par les aliments.

Avantageusement alors, l'organe de remuage est monté sur un moyeu coiffant la cheminée. Cette disposition permet d'assurer un centrage du moyen de remuage indépendant de l'organe d'entraînement en rotation.

Avantageusement alors, le moyeu présente un verrou mobile de retenue prévu pour venir en prise avec une conformation interne de la cheminée. Cette disposition permet d'obtenir une retenue axiale du moyen de remuage qui limite le soulèvement du moyen de remuage par les aliments.

Avantageusement encore, le moyen de remuage comporte une partie supérieure présentant des conformations en créneaux arrondis aptes à entraîner l'accessoire de cuisson amovible dans des conditions normales de fonctionnement tout en permettant un échappement de l'accessoire de cuisson amovible par rapport au moyen de remuage en cas de blocage de la rotation de l'accessoire de cuisson amovible. Ainsi l'organe d'entraînement est configuré pour réaliser un entraînement débrayable de l'accessoire de cuisson amovible en cas de blocage de la rotation de l'accessoire de cuisson amovible.

Avantageusement encore, le moyen de réception présente au moins un organe de support périphérique prévu pour le glissement de l'accessoire de cuisson amovible entraîné en rotation, et de préférence au moins trois organes de support périphériques prévus pour le glissement de l'accessoire de cuisson amovible entraîné en rotation. Ainsi il n'est pas nécessaire de prévoir une répartition équilibrée des aliments sur l'accessoire de cuisson amovible. Cette disposition permet de réduire les efforts de retenue de l'accessoire de cuisson amovible monté sur le moyen de remuage.

Avantageusement alors, l'organe de support périphérique est monté sur un bord supérieur du moyen de réception. Cette disposition permet d'optimiser le volume disponible à l'intérieur du moyen de réception.

L'invention sera mieux comprise à l'étude d'un exemple de réalisation et d'une variante, pris à titre nullement limitatif, illustrés dans les figures annexées, dans lesquelles :
- la figure 1 est une vue en éclaté d'un appareil électrique de cuisson comportant un moyen de remuage formant un dispositif de remuage débrayable selon l'invention,
- la figure 2 est une vue en perspective d'un accessoire de cuisson amovible illustré sur la figure 1,
- la figure 3 est une vue en élévation et en coupe de l'accessoire de cuisson amovible illustré sur les figures 1 et 2,
- la figure 4 est une vue de dessus en perspective de la poignée amovible illustrée sur la figure 1,
- la figure 5 est une vue en perpective de la cuve illustrée sur la figure 1 recevant le moyen de remuage illustré sur la figure 1,
- la figure 6 est une vue en perpective de la cuve illustrée sur les figures 1 et 5, recevant le moyen de remuage illustré sur les figures 1 et 5 (non visible sur la figure 6) sur lequel est disposé l'accessoire de cuisson amovible illustré sur les figures 1 à 3, sur lequel est montée la poignée amovible illustrée sur les figures 1 et 4,
- la figure 7 reprend la figure 6 avec une coupe partielle de l'accessoire de cuisson amovible illustré sur les figures 1 à 3,
- la figure 8 est une vue en élévation du moyen de remuage illustré sur les figures 1 et 5,
- la figure 9 est une vue en éclaté du moyen de remuage illustré sur les figures 1, 5, 7 et 8,
- la figure 10 est une vue de dessus du moyen de remuage illustré sur les figures 1, 5, 7 à 9,
- la figure 11 est une vue en élévation et en coupe du moyen de remuage illustré sur les figures 1, 5, 7 à 10 utilisé en l'absence de l'accessoire de cuisson amovible illustré sur les figures 1 à 3,
- la figure 12 est une vue en élévation et en coupe du moyen de remuage illustré sur les figures 1, 5, 7 à 10 utilisé en présence de l'accessoire de cuisson amovible illustré sur les figures 1 à 3.

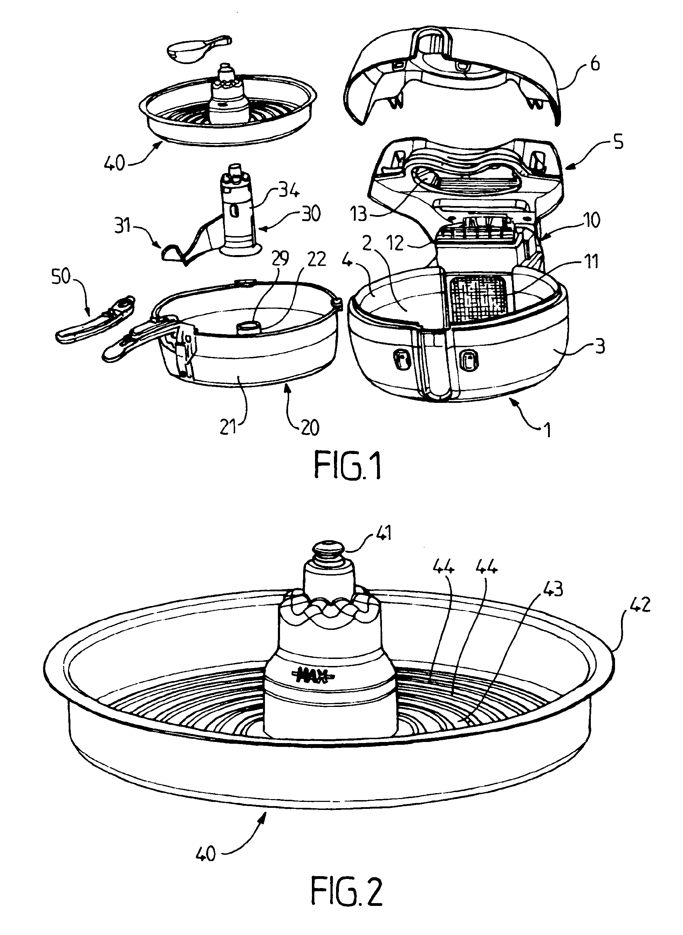

L'appareil électrique de cuisson illustré sur la figure 1 comprend une enceinte de cuisson 2, un dispositif de chauffe 10 conçu pour générer un flux chauffant dans l'enceinte de cuisson 2, un moyen de réception 20 prévu pour recevoir les aliments dans l'enceinte de cuisson 2, et un moyen de remuage 30 disposé au sein du moyen de réception 20 et entraîné en rotation par rapport au moyen de réception 20. Le moyen de remuage 30 forme un moyen pour enduire automatiquement les aliments d'une pellicule de matière grasse par brassage desdits aliments avec de la matière grasse, tel que décrit dans le document WO 2007/088279. L'appareil de cuisson illustré sur la figure 1 forme ainsi une friteuse à cuisson sèche.

L'appareil électrique de cuisson comporte un boîtier 1 comprenant un corps de boîtier 3 présentant une ouverture supérieure 4 et un couvercle 5. L'enceinte de cuisson 2 est ainsi délimitée par le corps de boîtier 3 surmonté du couvercle 5. Selon la forme de réalisation préférée illustrée sur la figure 1 le couvercle 5 est monté pivotant sur le corps de boîtier 3. Le couvercle 5 comprend un capot 6 amovible réalisé de préférence en matière transparente.

Le dispositif de chauffe 10 est avantageusement logé dans le boîtier 1. Le dispositif de chauffe 10 comprend une entrée d'air 11 reliée par un conduit 12 à une sortie d'air 13 débouchant dans l'enceinte de cuisson 2. Le dispositif de chauffe 10 comprend des moyens de chauffe et des moyens de ventilation, agencés dans le conduit 12, non visibles sur la figure 1.

Tel que représenté sur la figure 1, le moyen de réception 20 est formé par une cuve 21 montée dans l'enceinte de cuisson 2. La cuve 21 est avantageusement agencée amovible dans l'enceinte de cuisson 2. La cuve 21 présente une cheminée 22.

Le moyen de remuage 30 comporte un organe de remuage 31. Le moyen de remuage 30 agencé dans la cuve 21 sur la cheminée 22 est entraîné en rotation par un dispositif d'entraînement (non visible sur la figure 1) agencé dans le boitier 1. Dans l'exemple de réalisation illustré sur la figure 1, l'organe de remuage 31 est monté sur un moyeu 34 coiffant la cheminée 22 lorsque le moyen de remuage 30 est en place dans le moyen de réception 20.

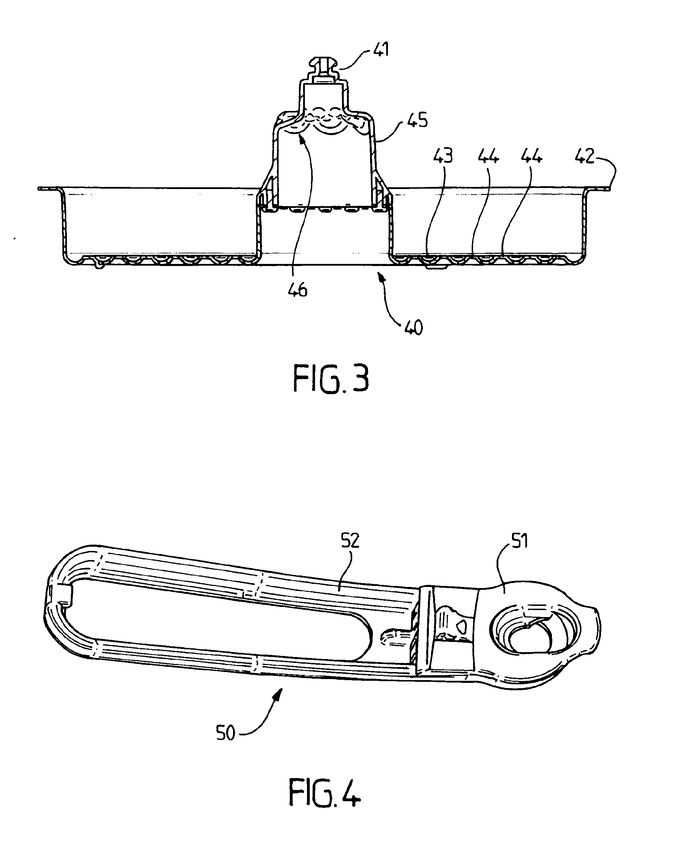

Le moyen de remuage 30 est prévu pour entraîner en rotation un accessoire de cuisson 40 amovible, mieux visible sur les figures 2 et 3. L'accessoire de cuisson 40 entraîné en rotation par le moyen de remuage 30 est logé dans l'enceinte de cuisson 2. L'accessoire de cuisson 40 présente avantageusement une configuration circulaire.

Plus particulièrement selon l'exemple de réalisation illustré sur les figures, le moyen de remuage 30 est prévu pour porter l'accessoire de cuisson 40. Ainsi l'accessoire de cuisson 40 peut être disposé sur le moyen de remuage 30.

L'accessoire de cuisson 40 présente un organe de préhension 41. L'accessoire de cuisson 40 comporte un bord latéral 42 entourant un fond 43. Des conformations en relief 44 sont ménagées sur le fond 43.

L'organe de préhension 41 est formé par un élément central 45 monté dans une ouverture centrale du fond 43. La partie inférieure de l'élément central 45 forme un organe d'entrainement 46 prévu pour venir en prise avec le moyen de remuage 30 lorsque l'accessoire de cuisson 40 repose sur le moyen de remuage 30. L'organe d'entrainement 46 présente avantageusement une forme en créneaux arrondis. Une telle forme assure l'entrainement de l'accessoire de cuisson 40 par le moyen de remuage 30 dans des conditions normales de fonctionnement. Une telle forme permet aussi un échappement de l'accessoire de cuisson 40 par rapport au moyen de remuage 30 dans le cas où la rotation de l'accessoire de cuisson 40 serait gênée ou empêchée par un blocage des aliments contre le couvercle 5. Ainsi l'organe d'entraînement 46 est configuré pour réaliser un entraînement débrayable de l'accessoire de cuisson 40 en cas de blocage de la rotation de l'accessoire de cuisson 40.

L'appareil électrique de cuisson comporte une poignée de préhension 50 amovible, mieux visible sur la figure 4. La poignée de préhension 50 amovible est prévue pour être montée sur l'organe de préhension 41 de l'accessoire de cuisson 40. La poignée de préhension 50 amovible comporte avantageusement un coulisseau 51 monté mobile en translation sur un corps principal 52 contre un élément de rappel élastique (non visible sur la figure 4).

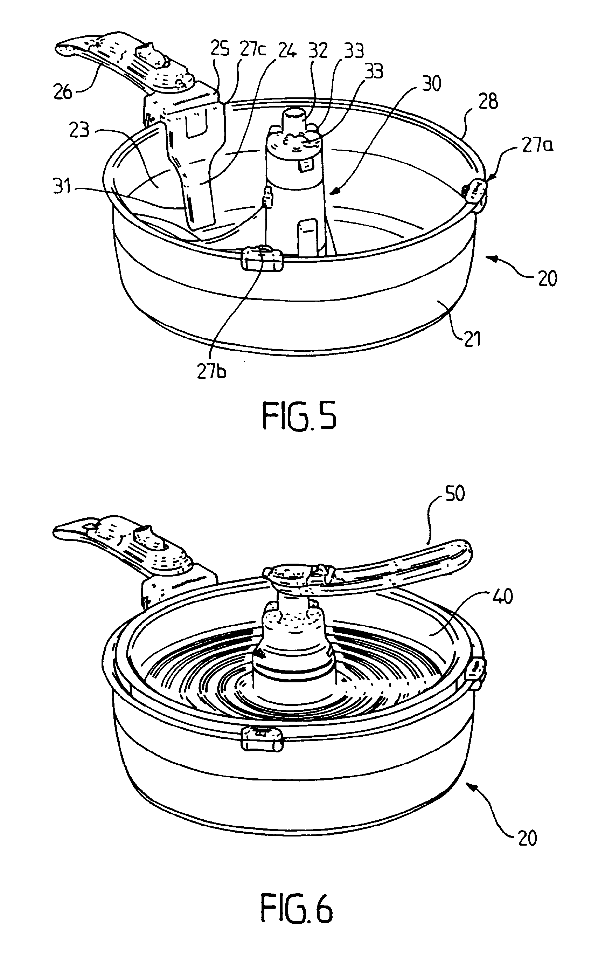

Tel que mieux visible sur la figure 5, le moyen de remuage 30 comporte une partie supérieure 32 présentant des conformations en crénaux arrondis 33 aptes à entraîner l'accessoire de cuisson 40 dans des conditions normales de fonctionnement tout en permettant un échappement de l'accessoire de cuisson 40 par rapport au moyen de remuage 30 en cas de blocage de la rotation de l'accessoire de cuisson 40.

Le moyen de réception 20 comporte une paroi latérale 23 présentant un obstacle 24 s'étendant en périphérie de la course du moyen de remuage 30. L'obstacle 24 est par exemple issu d'un support 25 d'une poignée pivotante 26, tel qu'illustré sur la figure 5. Le support 25 est monté sur la cuve 21.

Le moyen de réception 20 présente avantageusement au moins un organe de support périphérique 27a, 27b, 27c prévu pour le glissement de l'accessoire de cuisson 40 entraîné en rotation lorsque monté sur le moyen de remuage 30. De préférence le moyen de réception 20 présente au moins trois organes de support périphériques 27a, 27b, 27c prévus pour le glissement de l'accessoire de cuisson 40 entraîné en rotation. Tel que représenté sur la figure 5, les organes de support périphériques 27a, 27b sont formés par des patins en polyamide PA66 montés sur une collerette supérieure externe du bord supérieur de la cuve 21 et l'organe de support périphérique 27c est formé par un rebord du support 25. Ainsi les organes de support périphériques 27a, 27b, 27c sont montés sur un bord supérieur 28 du moyen de réception 20.

La figure 6 illustre la poignée de préhension 50 amovible montée sur l'accessoire de cuisson 40 amovible en place dans le moyen de réception 20 sur le moyen de remuage 30 (non visible sur la figure 6).

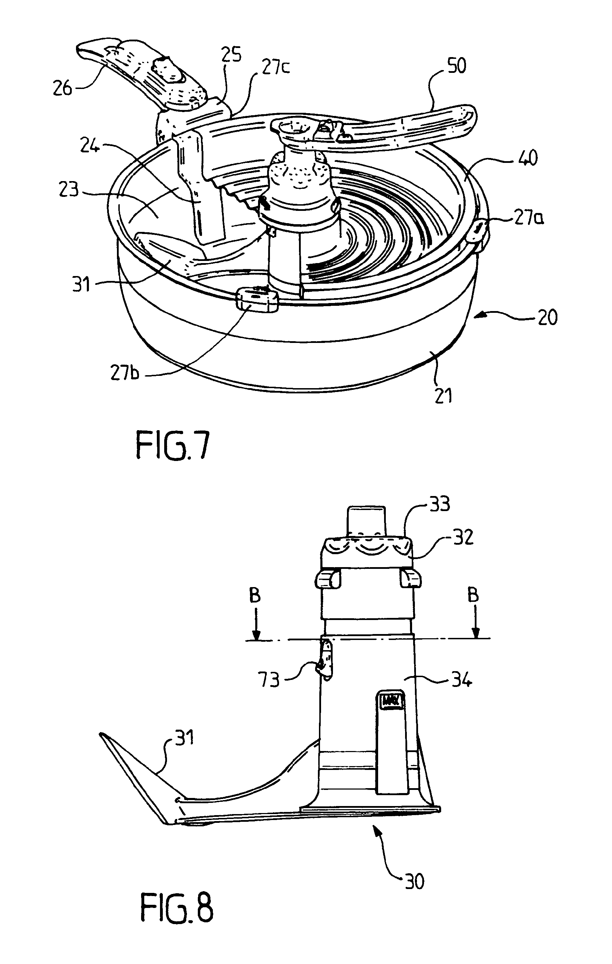

Le moyen de remuage 30 portant l'accessoire de cuisson 40 est visible sur la figure 7 reprenant la figure 6 avec une coupe partielle de l'accessoire de cuisson 40. L'accessoire de cuisson 40 amovible en place sur le moyen de remuage 30 s'étend au dessus et au-delà du moyen de remuage 30.

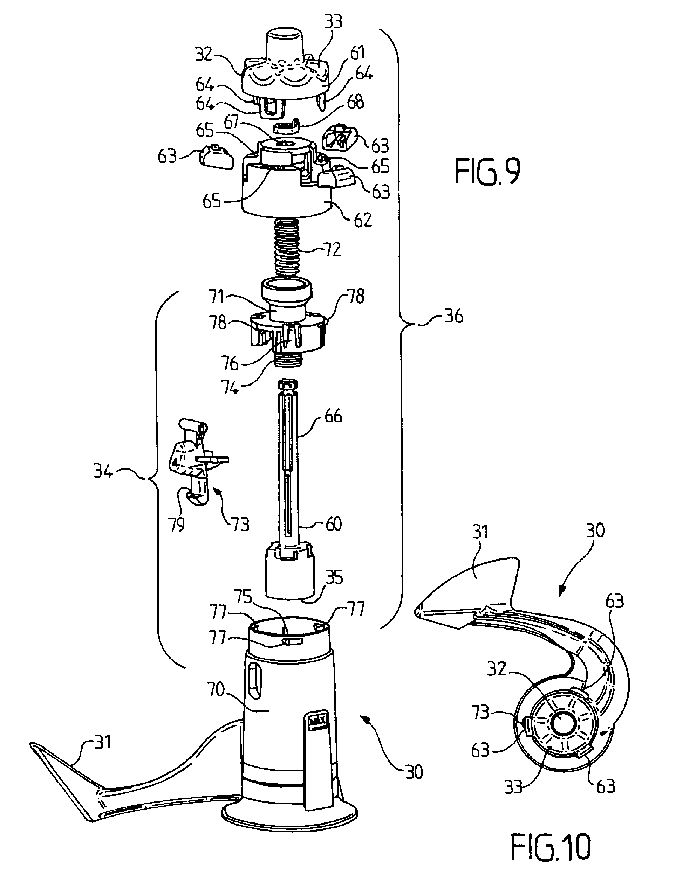

Le moyen de remuage 30 illustré sur les figures 8 à 10 forme un dispositif de remuage débrayable.

Le moyen de remuage 30 comporte un organe d'entraînement en rotation 35 entraîné en rotation par le dispositif d'entraînement agencé dans le boitier 1 lorsque le moyen de remuage 30 est en place dans le moyen de réception 20 disposé dans l'enceinte de cuisson 2.

L'organe de remuage 31 est monté sur le moyeu 34 solidaire en rotation du moyen de remuage 30. L'organe de remuage 31 est entraîné en rotation par un élément d'entraînement débrayable 36, la mise en place de l'accessoire de cuisson 40 amovible sur le moyen de remuage 30 désaccouplant l'élément d'entraînement débrayable 36 de l'organe de remuage 31.

Selon la forme de réalisation préférée illustrée sur les figures, l'élément d'entraînement débrayable 36 comporte l'organe d'entraînement en rotation 35.

Selon la forme de réalisation préférée illustrée sur les figures, l'organe d'entraînement en rotation 35 est porté par une tige 60 montée dans un corps principal 70 du moyeu 34. La partie supérieure 32 du moyen de remuage 30 comporte une tête 61 présentant les conformations en créneaux arrondis 33. La tête 61 est montée sur une coulisse 62 portant des verrous chanfreinés mobiles 63. La tête 61 est par exemple assemblée par clipsage avec la coulisse 62 en insérant des languettes 64 de la tête 61 dans des ouvertures 65 de la coulisse 62. La tige 60 est solidaire en rotation de la partie supérieure 32. A cette effet la tige 60 présente une partie nervurée 66 insérée dans une ouverture nervurée 67 de la coulisse 62. Un clip de maintien 68 assemble la tige 60 avec la coulisse 62. Le corps principal 70 du moyeu 34 porte une butée 71 soutenant un moyen de rappel élastique 72. La partie supérieure 32 est montée mobile contre le moyen de rappel élastique 72, la coulisse 62 reposant sur le moyen de rappel élastique 72. Ainsi l'élément d'entraînement débrayable 36 est monté mobile par rapport à l'organe de remuage 31 contre le moyen de rappel élastique 72. Le moyen de rappel élastique 72 est avantageusement formé par un ressort hélicoïdal. Le moyeu 34 présente un verrou mobile de retenue 73 monté pivotant dans la butée 71 contre un autre moyen de rappel élastique 74. L'autre moyen de rappel élastique 74 est avantageusement formé par un autre ressort hélicoïdal. Le verrou mobile de retenue 73 est prévu pour venir en prise avec une conformation interne 29 de la cheminée 22, tel que visible sur la figure 1. A cet effet le verrou de retenue 73 présente un crochet 79. La conformation interne 29 est par exemple formée par une collerette supérieure interne. Le corps principal 70 et la butée 71 sont assemblés l'un avec l'autre. A cet effet des nervures internes 75 du corps principal 70 sont insérées dans des rainures externes 76 de la butée 71 et des ergots 78 de la butée 71 sont insérés dans des encoches 77 du corps principal 70.

Selon la forme de réalisation préférée illustrée sur les figures, l'accessoire de cuisson 40 amovible est porté par l'élément d'entraînement débrayable 36. L'accessoire de cuisson 40 mis en place sur le moyen de remuage 30 repose sur les verrous chanfreinés mobiles 63 montés sur l'élément d'entraînement débrayable 36. Le moyen de remuage 30 peut comporter avantageusement entre trois et six verrous chanfreinés mobiles 63 montés sur l'élément d'entraînement débrayable 36, selon la taille de l'appareil.

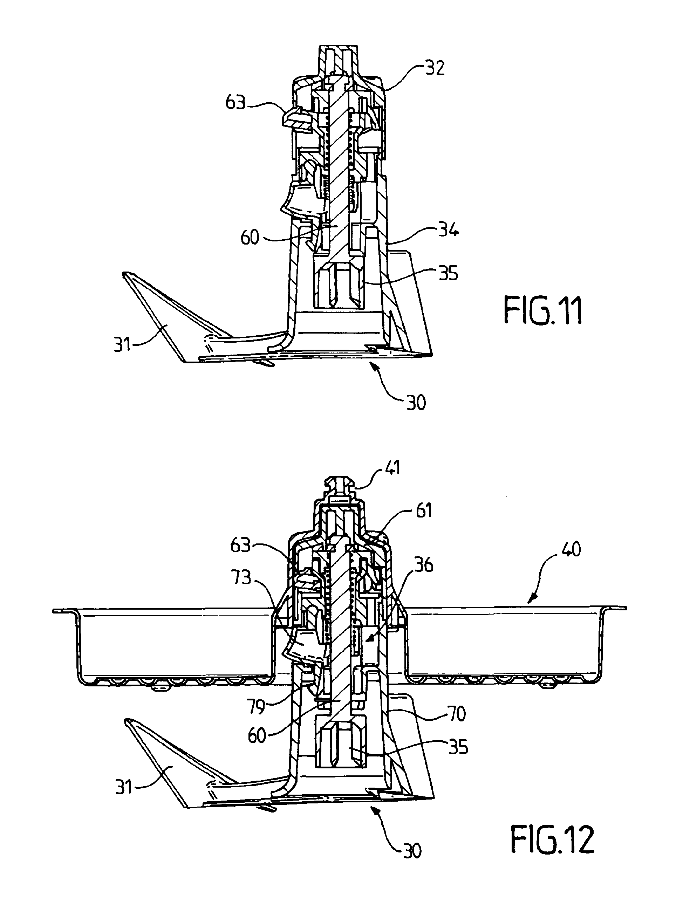

L'élément d'entraînement débrayable 36 est monté mobile par rapport à l'organe de remuage 31 entre une position de repos, illustrée sur la figure 11, occupée en l'absence de l'accessoire de cuisson 40 amovible, dans laquelle l'organe de remuage 31 est entraîné par l'élément d'entraînement débrayable 36, et une position débrayée, illustrée sur la figure 12, occupée lorsque l'accessoire de cuisson 40 amovible est entraîné par le moyen de remuage 30, dans laquelle l'organe de remuage 31 est libre en rotation par rapport à l'élément d'entraînement débrayable 36.

L'appareil selon l'invention s'utilise et fonctionne de la manière suivante.

L'utilisateur peut préparer un plat complet tel qu'un steak frites en plaçant des pommes de terre fraiches taillées en bâtonnets dans le moyen de réception 20 après avoir enlevé l'accessoire de cuisson 40 amovible, par exemple au moyen de la poignée de préhension amovible 50. L'utilisateur fait alors fonctionner l'appareil avec le moyen de remuage 30 mais sans l'accessoire de cuisson 40 amovible. Le dispositif de chauffe 10 associé au moyen de remuage 30 permet la cuisson des frites fraîches avec un peu d'huile ou des frites surgelées sans nécessiter d'ajout d'huile.

Lorsque la cuisson des frites est presque terminée, l'utilisateur ouvre le couvercle 5 et place dans l'enceinte de cuisson 2 l'accessoire de cuisson 40 avec un ou plusieurs steaks. L'utilisateur referme l'enceinte de cuisson 2 et remet en marche l'appareil. Les frites placées dans le moyen de réception 20 terminent de cuire et/ou sont maintenues au chaud lors de la cuisson du ou des steaks placés dans l'accessoire de cuisson 40.

La rotation de l'accessoire de cuisson 40 entraîné par l'élément d'entraînement débrayable 36 permet un passage du ou des steaks sous la sortie du conduit 12 et d'obtenir une cuisson rapide sous l'effet de l'air chaud frappant directement les aliments placés sur l'accessoire de cuisson 40, et sous l'effet de l'élévation de la température de l'accessoire de cuisson 40 frappé directement par l'air chaud à côté des aliments.

Lors de la mise en place de l'accessoire de cuisson 40 amovible sur le moyen de remuage 30, l'accessoire de cuisson 40 vient en contact avec les verrous chanfreinés mobiles 63 et les repousse à l'intérieur de l'élément d'entraînement débrayable 36. L'effort exercé par l'utilisateur sur la partie supérieure 32 du moyen de remuage 30 rapproche la partie supérieure 32 du moyeu 34 . Ainsi lors du déplacement de l'élément d'entraînement débrayable 36 vers la position débrayée les verrous chanfreinés mobiles 63 occupent une position de verrouillage illustrée sur la figure 12 maintenant l'élément d'entraînement débrayable 36 en position débrayée. L'utilisateur peut alors relacher l'accessoire de cuisson 40 amovible et retirer la poignée de préhension amovible 50 de l'accessoire de cuisson 40 amovible en manoeuvrant le coulisseau 51. Le moyen de remuage 30 reste en configuration débrayée et l'organe de remuage 31 n'est plus entraîné en rotation. La face extérieure du fond 43 de l'accessoire de cuisson 40 dépourvue d'arrête vive minimise les risques d'entraînement des frites, ce qui évite de les détériorer.

A titre de variante, le dispositif de chauffe 10 n'est pas nécessairement agencé dans le boîtier 1 mais peut être agencé au moins partiellement dans l'enceinte de cuisson 2.

A titre de variante, le couvercle 5 n'est pas nécessairement monté pivotant sur le corps de boîtier 3, et peut par exemple être posé sur le corps de boîtier 3.

A titre de variante, l'enceinte de cuisson 2 n'est pas nécessairement délimitée par un corps de boîtier 3 surmonté d'un couvercle 5, et peut par exemple comporter une porte latérale d'accès.

A titre de variante, le moyen de réception 20 n'est pas nécessairement formé par une cuve 21 agencée de manière amovible dans l'enceinte de cuisson 2. La cuve 21 peut notamment délimiter partiellement l'enceinte de cuisson 2.

A titre de variante l'élément d'entraînement débrayable 36 ne comporte pas nécessairement l'organe d'entraînement en rotation 35. En alternative l'élément d'entrainement débrayable pourrait notamment être monté mobile sur un moyeu du moyen de remuage, ce moyeu présentant l'organe d'entraînement en rotation.

A titre de variante, l'accessoire de cuisson 40 amovible n'est pas nécessairement porté par l'élément d'entraînement débrayable 36. L'accessoire de cuisson 40 amovible disposé dans l'enceinte de cuisson 2 pourrait notamment être porté par un moyeu du moyen de remuage 30, l'élément d'entraînement débrayable 36 étant alors monté mobile par rapport audit moyeu.

A titre de variante, l'accessoire de cuisson 40 amovible n'est pas nécessairement porté par le moyen de remuage 30. L'accessoire de cuisson 40 amovible disposé dans l'enceinte de cuisson 2 pourrait également être porté par le moyen de réception 20 ou par toute autre partie du boîtier 1 de l'appareil, tout en étant entraîné en rotation par le moyen de remuage 30.

A titre de variante, le moyen de remuage 30 ne comporte pas nécessairement de moyen de rappel élastique tel que le premier ressort de rappel 72. L'élément d'entraînement débrayable 36 pourrait notamment être repoussé vers le haut par l'accessoire de cuisson 40 amovible mis en place sur le moyen de remuage 30.

A titre de variante, les passages entre le moyen de réception 20 et l'accessoire de cuisson 40 porté par les organes de support périphériques 27a, 27b, 27c pourraient être remplacés par un passage annulaire en l'absence d'organe de support périphérique, par une portion de passage annulaire en présence d'un seul organe de support périphérique, et/ou par au moins un passage ménagé dans l'accessoire de cuisson 40 notamment dans la collerette supérieure externe formant le bord latéral 42 et/ou autour de l'élément central 45, de préférence au dessus du niveau des conformations en relief 44. Ces dispositions permettent d'améliorer la circulation de l'air chaud dans l'enceinte de cuisson 2 en présence de l'accessoire de cuisson.

La présente invention n'est nullement limitée à l'exemple de réalisation décrit et à ses variantes, mais englobe de nombreuses modifications dans le cadre des revendications.

## Revendications

1. Appareil électrique de cuisson, notamment friteuse à cuisson sèche, comprenant une enceinte de cuisson (2), un dispositif de chauffe (10) conçu pour générer un flux chauffant dans l'enceinte de cuisson (2), un moyen de réception (20) prévu pour recevoir les aliments dans l'enceinte de cuisson (2), et un moyen de remuage (30) disposé au sein du moyen de réception (20) et entraîné en rotation par rapport au moyen de réception (20), **caractérisé en ce que** le moyen de remuage (30) comporte un organe de remuage (31) entraîné en rotation par un élément d'entraînement débrayable (36), **en ce que** le moyen de remuage (30) est prévu pour entraîner en rotation un accessoire de cuisson (40) amovible et **en ce que** l'élément d'entraînement débrayable (36) est monté mobile par rapport à l'organe de remuage (31) entre une position de repos occupée en l'absence de l'accessoire de cuisson (40) amovible, dans laquelle l'organe de remuage (31) est entraîné par l'élément d'entraînement débrayable (36), et une position débrayée occupée lorsque l'accessoire de cuisson (40) amovible est entraîné par le moyen de remuage (30), dans laquelle l'organe de remuage (31) est libre en rotation par rapport à l'élément d'entraînement débrayable (36).

2. Appareil électrique de cuisson selon la revendication 1, **caractérisé en ce que** l'élément d'entraînement débrayable (36) comporte un organe d'entraînement en rotation (35).

3. Appareil électrique de cuisson selon l'une des revendications 1 ou 2, **caractérisé en ce que** le moyen de remuage (30) est prévu pour porter l'accessoire de cuisson (40) amovible.

4. Appareil électrique de cuisson selon la revendication 3, **caractérisé en ce que** l'accessoire de cuisson (40) amovible est porté par l'élément d'entraînement débrayable (36).

5. Appareil électrique de cuisson selon l'une des revendications 1 à 4, **caractérisé en ce que** l'élément d'entraînement débrayable (36) est monté mobile par rapport à l'organe de remuage (31) contre un moyen de rappel élastique (72).

6. Appareil électrique de cuisson selon les revendications 1 à 5, **caractérisé en ce que** l'accessoire de cuisson (40) amovible mis en place sur le moyen de remuage (30) repose sur des verrous chanfreinés mobiles (63) montés sur l'élément d'entraînement débrayable (36) et **en ce que** lors du déplacement de l'élément d'entraînement débrayable (36) vers la position débrayée les verrous chanfreinés mobiles (63) occupent une position de verrouillage maintenant l'élément d'entraînement débrayable (36) en position débrayée.

7. Appareil électrique de cuisson selon la revendication 6, **caractérisé en ce que** entre trois et six verrous chanfreinés mobiles (63) sont montés sur l'élément d'entraînement débrayable (36).

8. Appareil électrique de cuisson selon l'une des revendications 1 à 7, **caractérisé en ce que** le moyen de réception (20) comporte une paroi latérale (23) présentant un obstacle (24) s'étendant en périphérie de la course du moyen de remuage (30).

9. Appareil électrique de cuisson selon l'une des revendications 1 à 8, **caractérisé en ce que** l'accessoire de cuisson (40) amovible en place sur le moyen de remuage (30) s'étend au dessus et au-delà du moyen de remuage (30).

10. Appareil électrique de cuisson selon l'une des revendications 1 à 9, **caractérisé en ce que** le moyen de réception (20) est formé par une cuve (21) présentant une cheminée (22).

11. Appareil électrique de cuisson selon la revendication 10, **caractérisé en ce que** l'organe de remuage (31) est monté sur un moyeu (34) coiffant la cheminée (22).

12. Appareil électrique de cuisson selon l'une des revendications 10 ou 11, **caractérisé en ce que** le moyeu (34) présente un verrou mobile de retenue (73) prévu pour venir en prise avec une conformation interne (29) de la cheminée (22).

13. Appareil électrique de cuisson selon l'une des revendications 1 à 12, **caractérisé en ce que** le moyen de remuage (30) comporte une partie supérieure (32) présentant des conformations en créneaux arrondis (33) aptes à entraîner l'accessoire de cuisson (40) amovible dans des conditions normales de fonctionnement tout en permettant un échappement de l'accessoire de cuisson amovible (40) par rapport au moyen de remuage (30) en cas de blocage de la rotation de l'accessoire de cuisson amovible (40).

14. Appareil électrique de cuisson selon l'une des revendications 1 à 13, **caractérisé en ce que** le moyen de réception (20) présente au moins un organe de support périphérique (27a, 27b, 27c) prévu pour le glissement de l'accessoire de cuisson (40) amovible entraîné en rotation, et de préférence au moins trois organes de support périphériques (27a, 27b, 27c) prévus pour le glissement de l'accessoire de cuisson (40) amovible entraîné en rotation.

15. Appareil électrique de cuisson selon la revendication 14, **caractérisé en ce que** l'organe de support périphérique (27a, 27b, 27c) est monté sur un bord supérieur (28) du moyen de réception (20).

## Patentansprüche

1. Elektrisches Gargerät, im Speziellen eine Trockengarfriteuse, umfassend einen Garraum (2), eine Heizvorrichtung (10), die dafür vorgesehen ist, einen Heizstrom im Garraum (2) zu erzeugen, eine Aufnahmevorrichtung (20) zur Aufnahme der Nahrungsmittel im Garraum (2) und ein Rührwerk (30), das in der Aufnahmevorrichtung (20) angeordnet ist und relativ zur Aufnahmevorrichtung (20) in eine Drehbewegung versetzt wird, **dadurch gekennzeichnet, dass** das Rührwerk (30) ein Rührorgan (31) aufweist, das durch ein ausrückbares Antriebselement (36) in eine Drehbewegung versetzt wird, dass das Rührwerk (30) dafür vorgesehen ist, ein abnehmbares Garzubehör (40) in eine Drehbewegung zu versetzen, und dass das ausrückbare Antriebselement (36) in Relation zum Rührorgan (31) beweglich angebracht ist, zwischen einer Ruheposition, wenn kein abnehmbares Garzubehör (40) vorhanden ist, in der das Rührorgan (31) durch das ausrückbare Antriebselement (36) angetrieben wird, und einer ausgerückten Position, wenn das abnehmbare Garzubehör (40) durch das Rührwerk (30) angetrieben wird, in der das Rührorgan (31) in Relation zum ausrückbaren Antriebselement (36) frei dreht.

2. Elektrisches Gargerät nach Anspruch 1, **dadurch gekennzeichnet, dass** das ausrückbare Antriebselement (36) ein sich drehendes Antriebsorgan (35) aufweist.

3. Elektrisches Gargerät nach einem der Ansprüche 1 oder 2, **dadurch gekennzeichnet, dass** das Rührwerk (30) dafür vorgesehen ist, das abnehmbare Garzubehör (40) aufzunehmen.

4. Elektrisches Gargerät nach Anspruch 3, **dadurch gekennzeichnet, dass** das abnehmbare Garzubehör (40) am ausrückbaren Antriebselement (36) sitzt.

5. Elektrisches Gargerät nach einem der Ansprüche 1 bis 4, **dadurch gekennzeichnet, dass** das ausrückbare Antriebselement (36) in Relation zum Rührorgan (31) beweglich zu einem elastischen Rückholmittel (72) montiert ist.

6. Elektrisches Gargerät nach den Ansprüchen 1 bis 5, **dadurch gekennzeichnet, dass** das abnehmbare Garzubehör (40), das am Rührwerk (30) angebracht ist, auf beweglichen, abgeschrägten Verriegelungen (63) sitzt, die am ausrückbaren Antriebselement (36) montiert sind, und dass die beweglichen, abgeschrägten Verriegelungen (63) bei einer Bewegung des ausrückbaren Antriebselements (36) in die ausgerückte Position eine verriegelte Position einnehmen, durch die das ausrückbare Antriebselement (36) in ausgerückter Position gehalten wird.

7. Elektrisches Gargerät nach Anspruch 6, **dadurch gekennzeichnet, dass** zwischen drei und sechs bewegliche, abgeschrägte Verriegelungen (63) am ausrückbaren Antriebselement (36) montiert sind.

8. Elektrisches Gargerät nach einem der Ansprüche 1 bis 7, **dadurch gekennzeichnet, dass** die Aufnahmevorrichtung (20) eine Seitenwand (23) umfasst, die ein Hindernis (24) aufweist, das peripher zum Weg des Rührwerks (30) verläuft.

9. Elektrisches Gargerät nach einem der Ansprüche 1 bis 8, **dadurch gekennzeichnet, dass** das abnehmbare Garzubehör (40), das am Rührwerk (30) sitzt, über das Rührwerk (30) hinausragt.

10. Elektrisches Gargerät nach einem der Ansprüche 1 bis 9, **dadurch gekennzeichnet, dass** die Aufnahmevorrichtung (20) die Form einer Schüssel (21) hat, die einen Stutzen (22) aufweist.

11. Elektrisches Gargerät nach Anspruch 10, **dadurch gekennzeichnet, dass** das Rührorgan (31) auf einer Nabe (34) montiert ist, die über dem Stutzen (22) sitzt.

12. Elektrisches Gargerät nach einem der Ansprüche 10 oder 11, **dadurch gekennzeichnet, dass** die Nabe (34) einen beweglichen Halteriegel (73) aufweist, der dafür vorgesehen ist, in eine innenliegende Ausformung (29) des Stutzens (22) einzugreifen.

13. Elektrisches Gargerät nach einem der Ansprüche 1 bis 12, **dadurch gekennzeichnet, dass** das Rührwerk (30) aus einem oberen Teil (32) besteht, der Ausformungen in Form abgerundeter Schlitze (33) aufweist, die dafür geeignet sind, das abnehmbare Garzubehör (40) unter normalen Betriebsbedingungen anzutreiben, wobei ein Lösen des abnehmbaren Garzubehörs (40) in Relation zum Rührwerk (30) möglich ist, wenn das abnehmbare Garzubehör (40) in seiner Drehbewegung blockiert sein sollte.

14. Elektrisches Gargerät nach einem der Ansprüche 1 bis 13, **dadurch gekennzeichnet, dass** die Aufnahmevorrichtung (20) mindestens ein peripheres Stützorgan (27a, 27b, 27c) aufweist, das dafür vorgesehen ist, das abnehmbare Garzubehör (40) in der Drehbewegung zu führen, und vorzugsweise mindestens drei periphere Stützorgane (27a, 27b, 27c) aufweist, die dafür vorgesehen sind, das abnehmbare Garzubehör (40) in der Drehbewegung zu führen.

15. Elektrisches Gargerät nach Anspruch 14, **dadurch gekennzeichnet, dass** das periphere Stützorgan (27a, 27b, 27c) an einem oberen Rand (28) der Aufnahmevorrichtung (20) angebracht ist.

## Claims

1. Electrical cooking appliance, in particular dry fryer, comprising a cooking chamber (2), a heating device (10) designed to generate a heat flow in the cooking chamber (2), receiving means (20) designed to receive the food in the cooking chamber (2), and stirring means (30) arranged in the receiving means (20) and rotated relative to the receiving means (20), **characterised in that** that the stirring means (30) comprise a stirring member (31) rotated by a disengageable drive element (36), **in that** the stirring means (30) are designed to rotate a removable cooking accessory (40) and **in that** the disengageable drive element (36) is movably mounted relative to the stirring member (31) between a rest position occupied in the absence of the removable cooking accessory (40), wherein the stirring member (31) is driven by the disengageable drive element (36), and a disengaged position occupied when the removable cooking accessory (40) is driven by the stirring means (30), wherein the stirring member (31) is free to rotate relative to the disengageable drive element (36).

2. Electrical cooking appliance according to claim 1, **characterised in that** the disengageable drive element (36) comprises a rotational drive member (35).

3. Electrical cooking appliance according to claim 1 or 2, **characterised in that** the stirring means (30) are designed to support the removable cooking accessory (40).

4. Electrical cooking appliance according to claim 3, **characterised in that** the removable cooking accessory (40) is supported by the disengageable drive element (36).

5. Electrical cooking appliance according to one of claims 1 to 4, **characterised in that** the disengageable drive element (36) is movably mounted relative to the stirring member (31) against an elastic return means (72).

6. Electrical cooking appliance according to claims 1 to 5, **characterised in that** the removable cooking accessory (40) fitted on the stirring means (30) rests on mobile chamfered locks (63) mounted on the disengageable drive element (36) and **in that** when the disengageable drive element (36) is moved towards the disengaged position, the mobile chamfered locks (63) occupy a locking position holding the disengageable drive element (36) in disengaged position.

7. Electrical cooking appliance according to claim 6, **characterised in that** between three and six mobile chamfered locks (63) are mounted on the disengageable drive element (36).

8. Electrical cooking appliance according to one of claims 1 to 7, **characterised in that** the receiving means (20) comprise a lateral wall (23) having an obstacle (24) extending around the periphery of the stroke of the stirring means (30).

9. Electrical cooking appliance according to one of claims 1 to 8, **characterised in that** the removable cooking accessory (40) fitted on the stirring means (30) extends above and beyond the stirring means (30).

10. Electrical cooking appliance according to one of claims 1 to 9, **characterised in that** the receiving means (20) consist of a tank (21) with a chimney (22).

11. Electrical cooking appliance according to claim 10, **characterised in that** the stirring member (31) is mounted on a hub (34) covering the chimney (22).

12. Electrical cooking appliance according to claim 10 or 11, **characterised in that** the hub (34) has a movable bolt (73) designed to engage an inner conformation (29) of the chimney (22).

13. Electrical cooking appliance according to one of claims 1 to 12, **characterised in that** the stirring means (30) comprise an upper portion (32) having rounded notch conformations (33) capable of driving the removable cooking accessory (40) under normal operating conditions while allowing the removable cooking accessory (40) to escape from the stirring means (30) if rotation of the removable cooking accessory (40) should be blocked.

14. Electrical cooking appliance according to one of claims 1 to 13, **characterised in that** the receiving means (20) have at least one peripheral support member (27a, 27b, 27c) designed to allow slipping of the removable cooking accessory (40) driven in rotation, and preferably at least three peripheral support members (27a, 27b, 27c) designed to allow slipping of the removable cooking accessory (40) driven in rotation.

15. Electrical cooking appliance according to claim 14, **characterised in that** the peripheral support member (27a, 27b, 27c) is mounted on an upper edge (28) of the receiving means (20).
